# EUROPÄISCHE PATENTSCHRIFT

(11) **EP 2 737 889 B1**
(45) Veröffentlichungstag und Bekanntmachung des Hinweises auf die Patenterteilung: **15.03.2017**
(21) Anmeldenummer: 13194855.6
(22) Anmeldetag: 28.11.2013
(51) Int. Cl.: A61J 1/14, B65D 55/02, B65D 41/32

(54) **Behältnis für Arzneimittel und Medizinprodukte mit Originalitätsverschluss und Verfahren zum Verschließen eines solchen Behältnisses**
Container for drugs and medical devices with tamper-evident container lid and method for closing such a container
Récipient pour médicaments et produits médicaux doté d'une fermeture originale et procédé de fermeture d'un tel récipient

(30) Priorität: 03.12.2012 DE 102012111743
(43) Veröffentlichungstag der Anmeldung: 04.06.2014
(73) Patentinhaber: B. Braun Avitum AG, 34212 Melsungen (DE)
(72) Erfinder: Orszullok, Willy, 58809 Neuenrade (DE)
(74) Vertreter: Winter, Brandl, Fürniss, Hübner, Röss, Kaiser, Polte - Partnerschaft mbB

(56) Entgegenhaltungen:
- EP-A1- 0 060 931
- EP-A2- 0 803 442
- DE-U- 7 311 517
- GB-A- 2 134 499

## Beschreibung

Die Erfindung betrifft ein Behältnis (Behälter, Gebinde, Beutel, Kartusche) für Arzneimittel und/oder Medizinprodukte, insbesondere einen Dialysatbehälter (Dialysatbeutel) oder einen NaCl-Lösungs-Aufnahmebehälter, mit einem Öffnungsstutzen (Hohlzylinder, Tülle, Anschlussport, Hals, Behältnishals, Gebindehals), der einen Ein-/Auslass (Port, Ausguss, Beutelport, Anschluss) in einer Stirnseite aufweist, mit einem über den Öffnungsstutzen gestülpten Originalitätsverschluss (Kappe, Glocke, Deckel), wobei der Originalitätsverschluss einen am Öffnungsstutzen zu verbleibenden ersten Abschnitt und einen vom ersten Abschnitt abreißbaren oder abbrechbaren zweiten Abschnitt aufweist, mit desweiteren einer Verschweißung (stoffschlüssige Verbindung) zwischen einer Außenfläche des Öffnungsstutzens und einer Innenfläche des ersten Abschnitts des Originalitätsverschlusses.

Aus dem Stand der Technik, etwa aus der DE 101 47 907 A1, sind Behälter mit Filterkappen sowie Verfahren zur Herstellung von Behälterverschlüssen bekannt. Dort ist offenbart, dass eine Filterkappe mit einem Gehäuse verschweißt wird.

Das Nutzen von Verschweißungen in allgemeiner Art, sowie das Verschweißen von Kunststofffolien, bspw. von Polyolefin-Folien ist schon aus der DE 197 46 402 A1 bekannt.

Häufig werden solche und ähnliche Schweißverfahren zum Verschließen von Kunststoff-Behältnissen für Arzneimittel und Medizinprodukte eingesetzt. Das Verschließen von Behältnissen für Arzneimittel und Medizinprodukte durch bspw. Rotationsreibschweißen ist ein bekanntes und kostengünstiges Verfahren, um einen Verschluss stoffschlüssig mit dem Gebinde zu verbinden.

Der Verschluss kann dabei als Originalitätsverschluss ausgebildet sein, derart, dass beim Öffnen ein erster Abschnitt von ihm an dem Öffnungsstutzen des Behälters verbleibt, wobei der Öffnungsstutzen in einer Stirnseite einen Ein-/Auslass aufweist. Ein
zweiter Abschnitt des Originalitätsverschlusses kann durch manuell aufgebrachte Handkraft vom zweiten Abschnitt abgerissen oder abgebrochen werden. Dabei kann eine Drehbewegung oder eine Knickbewegung zum Abbrechen eingesetzt werden.

Bei einem Rotationsreibschweißverfahren werden die zu verschweißenden Baukomponenten aufeinandergedrückt und unter Druck so lange rotationsförmig gegeneinander gerieben, bis dazwischen eine Schmelze entsteht, die nach einem schlagartigem Stopp der Drehbewegung erkaltet, so dass die Bauteile miteinander fest verschweißt sind.

Die GB 2 134 499 offenbart beispielsweise einen Behälter für Lebensmittel oder auch medizinische Produkte mit einem Originalitätsverschluss. Der Originalitätsverschluss wird mittels eines Reibschweißverfahrens auf den Behälter aufgebracht.

Die EP 0 803 442 A2 offenbart ein Behältnis für Arzneimittel und/oder Medizinprodukte mit einem Luer-Verschluss im Öffnungsstutzen und mit einer Schweißnaht zwischen Originalitätsverschluss und Öffnungsstutzen mit Sollbruchstelle.

Es ist jedoch bei einem solchen Verfahren als nachteilig festgestellt worden, dass während des Verschweißens auftretende Partikel, bedingt durch die Rotation des einen Bauteils an dem anderen, verunreinigend in den Ein-/Auslass des Beutels und dann in das Innere des Beutels gelangen können. Während des Reibens (Rotierens) der zwei miteinander zu verschweißenden Bauteile werden nämlich Partikel abgerieben und können, bevor eine Schmelze durch das Rotieren der zwei Bauteile aneinander entsteht, in das Innere des Behältnisses (Gebinde, Beutel, Flasche, Schlauch) gelangen.

Zwar ist es bekannt, dass solche Partikel durch Labyrinthdichtungen von den Bereichen ferngehalten werden können, wo sie Nachteile für den Anwender hervorrufen, also bspw. vom Ein-/Auslass, doch sind solche Labyrinthdichtungen nicht so zuverlässig, wie man wünschen würde. Da die Labyrinthdichtungen berührungslos arbeiten müssen, um nicht ihrerseits wiederum Partikel durch ein Aneinanderreiben zu erzeugen, besteht die Gefahr, dass kleinste Partikel trotzdem die Labyrinthdichtungen passieren und so Nachteile für das Produkt bzw. für den Anwender bewirken.

Es ist die Aufgabe der Erfindung, ein Verfahren zum Verschließen eines Öffnungsstutzens eines Behältnisses für Arzneimittel und/oder Medizinprodukte zur Verfügung zu stellen, das die bekannten Nachteile vermeidet, genauso wie ein Behältnis zur Verfügung gestellt werden soll, das kostengünstig herstellbar ist und für medizinischeAnwendungen besonders gut geeignet ist, also insbesondere einen Eintritt von während des Erstellens der Verschweißung entstehenden Partikel in das Innere des Behältnisses verhindert.

### Offenbarung der Erfindung

Diese Aufgabe wird erfindungsgemäß durch ein Behältnis nach Anspruch 1 und ein Verfahren nach Anspruch 10 gelöst.

Demzufolge wird ein Behältnis für Arzneimittel und/oder Medizinprodukte vorgeschlagen mit
- einem Öffnungsstutzen, der einen Ein-/Auslass aufweist,
- einem über den Öffnungsstutzen gestülpten Originalitätsverschluss, der einen am Öffnungsstutzen verbleibenden ersten Abschnitt und einen vom ersten Abschnitt an einer Sollbruchlinie abreißbaren oder abbrechbaren zweiten Abschnitt hat und
- einer Verschweißung zwischen einer Außenfläche des Öffnungsstutzens und einer Innenfläche des ersten Abschnitts des Originalitätsverschlusses. Erfindungsgemäß ist die Verschweißung zwischen einer radial äußeren Umfangsfläche des Öffnungsstutzens und einer radial inneren Umfangsfläche des den Öffnungsstutzen in diesem Bereich hülsenförmig umgebenden ersten Abschnitts sowie in axial proximalem Abstand zum Ein-/Auslass vorgesehen.

Durch diese Ausbildung kann auf einfache und sichere Weise eine Umfangsschweißnaht insbesondere durch Reibschweißen (Rotationsreibschweißen) erzeugt werden, ohne dass hierdurch der Ein-/Auslass des Öffnungsstutzens beschädigt werden kann. Die Schweißnaht befindet sich in einem axial großen Abstand zum Ein-/Auslass, wobei sich zwischen dem Originalitätsverschluss und dem Öffnungsstutzen ein nur enger Ringspalt ergibt. Daher können Partikel nur schwer in Richtung hin zum Ein-/Auslass wandern.

Gemäß einem ggf. unabhängig zu beanspruchenden Aspekt der Erfindung ist axial zwischen der Verschweißung und dem Ein-/Auslass des Öffnungsstutzens sowie in axial proximalem Abstand zur Sollbruchlinie eine Dichtungseinrichtung radial zwischen dem ersten Abschnitt und dem Öffnungsstutzen so angeordnet, dass sie zumindest beim Erstellen der Verschweißung entstehende Partikel am Eintritt in den Ein-/Auslass hindert oder abhält.

Es sei darauf hingewiesen, dass die Dichtungseinrichtung auch als Dichtung oder Dichteinrichtung bezeichnet werden kann. Der Ein-/Auslass kann auch als Port bezeichnet werden, auch kann er als Ausgussöffnung bezeichnet werden.

Eine erfindungsgemäße Ausgestaltung eines Verfahrens zum Verschließen eines Öffnungsstutzens eines Behältnisses zur Aufnahme von Arzneimitteln und/oder Medizinprodukten (medizinisches Behältnis) mit einem glocken- oder kappenartigen Originalitätsverschluss, weist die Schritte auf, dass zuerst der Originalitätsverschluss über den Öffnungsstutzen gestülpt wird, dann eine Rotation des Originalitätsverschlusses relativ zum Öffnungsstutzen erzeugt wird, die eine Verschweißung der beiden Bauteile erzeugt, wobei nach dem Erzeugen der Verschweißung eine in Längsrichtung des Öffnungsstutzens weisende Translationsbewegung des Originalitätsverschlusses eingeleitet wird, um den Originalitätsverschluss weiter auf den Öffnungsstutzen zu schieben. Dadurch wird die Verschweißung versetzt und die Dichtung kann in einem besonderen Bedarfsfall auf eine radiale Eindrehung am Öffnungsstutzen gleiten oder in einer Umfangsnut am Öffnungsstutzen einschnappen.

Vorteilhafte Ausführungsformen sind in den Unteransprüchen beansprucht und werden nachfolgend näher erläutert.

So ist es von Vorteil, wenn die Dichtungseinrichtung mit der Stirnseite des Öffnungsstutzens, vorzugsweise mit einer die Stirnseite begrenzenden Umfangskante, in dichtender Wirkbeziehung steht oder mit einer Außenumfangsfläche des Öffnungsstutzens, vorzugsweise im Bereich einer Umfangsnut/Eindrehung, in dichtender Wirkbeziehung steht. Auf diese Weise kann unter Nutzung einfacher baulicher Mittel eine schon während des Herstellens der Verschweißung wirkende Dichtung (Dichtungseinrichtung / Dichteinrichtung) erhalten werden. Die Dichtungseinrichtung kann nach Beendigung bspw. der Rotation des Originalitätsverschlusses relativ zum Öffnungsstutzen durch eine Translationsbewegung des Originalitätsverschlusses in eine zweite Position axial verlegt werden, wodurch eine Dichtungswirkung zwischen dem ersten Abschnitt des Originalitätsverschlusses und dem Öffnungsstutzen besonders sicher erreicht ist.

Es ist dabei von Vorteil, wenn für die Erstellung der Verschweißung (während des Rotationsschweißens) die Dichtungseinrichtung zunächst auf einer der Verschweißung abgewandten Seite der Stirnseite des Öffnungsstutzens (auf der dem Behältnis abgewandten Seite des Öffnungsstutzens) positioniert ist oder auf einer der Verschweißung zugewandten Seite (dem Behältnis zugewandt) der Stirnseite des Öffnungsstutzens, bspw. in der Umfangsnut positioniert ist. Die Verschweißung kann dann über eine Tangential-Rotations-Reibverschweißung erreicht werden und die Dichtungseinrichtung nach Beendigung der Relativrotation des Originalitätsverschlusses vom Öffnungsstutzen aus gesehen, von der Behältnis abgewandten Seite der Umfangskante mittels einer Translationsbewegung auf die dem Behältnis zugewandten Seite der Umfangskante verlagert werden. Die Dichtungseinrichtung sollte vorzugsweise in beiden Stellungen (auch geringfügig oberhalb der Stirnseite des Öffnungsstutzens) eine noch ausreichend dichtende Wirkung aufweisen, und somit das Eindringen von Partikeln in den Ein-/Auslass (Port) verhindern (abhalten).

Ein vorteilhaftes Ausführungsbeispiel ist auch dadurch gekennzeichnet, dass die Verschweißung an einer Außenumfangsfläche des Öffnungsstutzens, vorzugsweise in einem zylindrischen Bereich, und an einer Innenumfangsfläche des ersten Abschnitts des Originalitätsverschlusses, vorzugsweise in einem konischen Bereich, den Öffnungsstutzen mit dem ersten Abschnitt stofflich verbindend vorhanden ist. An den Umfangsflächen des Öffnungsstutzens und des ersten Abschnitts des Originalitätsverschlusses lässt sich bspw. bei einem leicht konischen Ausgestalten einer der beiden Umfangsflächen oder beider Umfangsflächen beim Aufsetzen des Originalitätsverschlusses auf den Öffnungsstutzen und nachfolgender Rotation des Originalitätsverschlusses relativ zum Öffnungsstutzen eine Verschweißung der beiden Bauteile sicher miteinander erreichen. Es ist auch zweckmäßig, wenn die Dichtungseinrichtung als Dichtlippe am Originalitätsverschluss befestigt ist, vorzugsweise integral (stoffeinstückig) an ihm angeformt ist.

Dabei ist es von Vorteil, wenn die Dichtlippe im Bereich des ersten Abschnitts des Originalitätsverschlusses vorhanden ist. Bei einer solchen Ausführungsform müssen nur wenige Bauteile miteinander kombiniert werden, um den gewünschten Dichtungseffekt zu erreichen. Die Montage wird dadurch vereinfacht.

Alternativ oder zusätzlich kann die Dichtungseinrichtung auch als separater O-Ring am Öffnungsstutzen festgelegt sein, insbesondere ist es hierbei von Vorteil, wenn der O-Ring in der Umfangsnut oder einer Außennut (radiale Eindrehung), die über den Umfang des Öffnungsstutzens umläuft, befindlich ist. Standard-O-Ringe, die im Bedarfsfall auch noch nachbearbeitet sein können, lassen sich dann einsetzen, was die Kosten reduziert.

Damit während eines Rotationsverschweißungsvorganges, also während des Rotierens des Originalitätsverschlusses relativ zum Öffnungsstutzen, um die Verschweißung auszubilden, keine Partikel vom O-Ring oder von dem mit dem O-Ring in Beziehung stehenden (in Kontakt stehenden) Bauteilen abgerieben werden, ist es von Vorteil, wenn die Dichtungseinrichtung eine gleitfähig oder abriebfest ausgestaltete Oberfläche aufweist, die vorzugweise durch Plasmaätzen und/oder Plasmabeschichten geschaffen ist, und diese Oberfläche zumindest dem Öffnungsstutzen und/oder dem Originalitätsverschluss bzw. den jeweiligen Innen- und Außenflächen dieser beiden Bauteile, zugewandt ist. Auf diese Weise kann die Dichtungseinrichtung effizient als Partikelsperre ausgebildet werden.

Es ist auch von Vorteil, wenn die Umfangsnut zum dichtenden Aufnehmen der Dichtungseinrichtung ausgebildet ist, insbesondere im Fall, dass die Dichtungseinrichtung eine in Längsrichtung des Öffnungsstutzens oder des Originalitätsverschlusses ausgerichtete Translationsbewegung ausführt. Eine Dichtwirkung lässt sich dann während des Herstellens der Verschweißung gewährleisten, aber auch später, nachdem mittels einer reinen Translationsbewegung der Originalitätsverschluss in eine behältnisnähere Position verlagert wurde. Eine besonders dichte und dauerhafte Lösung wird dann erreicht.

Es ist auch von Vorteil, wenn die Umfangsnut für den Fall der Translationsbewegung des Originalitätsverschlusses auf einen Hauptkörper des Behältnisses zu, eine zum Beibehalten einer Dichtwirkung ausreichend große axiale Länge aufweist. Zu jedem Zeitpunkt kann dann eine Verunreinigung des Beutel-/Behältnisinneren vermieden werden. Es sei angemerkt, dass der Hauptkörper und der Öffnungsstutzen zusammen mit eventuell weiteren Anschlüssen und/oder Ösen das Behältnis ausbilden.

Als besonders einfach herstellbar und belastbar hat sich herausgestellt, wenn die Verschweißung eine Tangential-Rotations-Verschweißung ist.

Um nach einem Entfernen des zweiten Abschnittes des Originalitätsverschlusses eine Koppelung mit medizinischen Zusatzeinrichtungen zu ermöglichen, ist es von Vorteil, wenn in den Ein-/Auslass ein Luer-Anschluss mit einer ersten und einer zweiten Öffnung eingesetzt und/oder befestigt ist.

Um das Entfernen des zweiten Abschnittes des Originalitätsverschlusses vom ersten Abschnitt des Originalitätsverschlusses zu erleichtern, ist es von Vorteil, wenn eine Sollbruchstelle zwischen dem ersten Abschnitt des Originalitätsverschlusses und dem zweiten Abschnitt des Originalitätsverschlusses auf einer der Verschweißung gegenüberliegenden Seite der Dichtungseinrichtung vorhanden ist.

Das erfindungsgemäße Verfahren kann auch weitergebildet werden, wenn die Translationsbewegung vor dem Erstarren der Verschweißung durchgeführt wird. Auf diese Weise kann eine stoffschlüssige Verbindung zwischen dem Originalitätsverschluss und dem Öffnungsstutzen vor dem Zeitpunkt der Translationsbewegung und nach dem Zeitpunkt der Translationsbewegung beibehalten bzw. sichergestellt werden.

Wenn die Dichtungseinrichtung durch eine reine (ausschließliche) Axialbewegung verlagerbar ist, wird eine Beschädigung der Dichtungseinrichtung nachhaltig vermieden. Trotzdem wird die Dichtwirkung nicht beeinträchtigt.

Es ist auch von Vorteil, wenn die Verschweißung durch Rotation des Originalitätsverschlusses relativ zum Öffnungsstutzen, bei in Anlagebefindlichkeit der beiden Bauteile miteinander, erzeugt wird. Der apparative Aufwand beim Herstellen der Verschweißung kann dann niedrig gehalten werden.

Vorteilhaft ist es auch, wenn eine Oberfläche der Dichtungseinrichtung, die mit einem rotierbaren oder rotierenden Bauteil in Kontakt bringbar oder befindlich ist, gleitfähig und/oder abriebfrei ausgestaltet ist, vorzugsweise durch Plasmaätzen und/oder Plasmabeschichten. Das Entstehen von eventuell verunreinigenden Partikeln während des Verschweißens kann dann reduziert oder gar vermieden werden.

Mit anderen Worten wird ein Verfahren zum Verschließen eines Öffnungsstutzens eines Behältnisses (Gebinde, Beutel) für Arzneimittel und/oder Medizinprodukte mit einem glocken- oder kappenartigen Verschluss vorgeschlagen, wobei zuerst der Verschluss so weit über den Öffnungsstutzen gestülpt wird, dass eine zwischen der Innenseite des Verschlusses und der Außenseite des Öffnungsstutzens befindliche Dichtungseinrichtung näher an einem durch den Öffnungsstutzen definierten Ein-/Auslass (Port) des Behältnisses (Gebinde, Beutel) angeordnet ist, als eine zwischen dem Öffnungsstutzen und dem Verschluss befindliche, diese verbindende Verschweißung, die nach dem Aufstülpen des Verschlusses auf den Öffnungsstutzen erfolgt. Zwischen der Dichtungseinrichtung und dem Öffnungsstutzen und/oder dem Verschluss ist so ein Abstand vorhanden, dass beim Erzeugen der Verschweißung auftretende Partikel am Eintritt in den Öffnungsstutzen gehindert sind. Nach dem Erzeugen der Verschweißung und vor dem Aushärten der Verschweißung wird der Verschluss mit einer einen in Längsrichtung des Öffnungsstutzens ausgerichteten Axialanteil aufweisenden Bewegung vom distalen Ende in Richtung eines proximalen Endes des Öffnungsstutzens verschoben, also wird der Originalitätsverschluss von einem behältnisfernen (hauptkörperfernen) Ende zu einem behältnisnahen (hauptkörpernahen) Ende verschoben.

Mit anderen Worten könnte auch ausgedrückt werden, dass ein Schweißverfahren zum Verschließen von Kunststoff-Behältnissen für Arzneimittel und Medizinprodukte vorgestellt wird, das ein Tangential-Rotations-Reibschweißverfahren einsetzt. Es wird dabei eine Abdichtung gegen in einen Anwenderbereich gelangende Partikel erzeugt, wobei der für ein Rotations-Reibschweißverfahren erforderliche Schweißdruck durch ein Überstülpen eines mit Untermaß ausgelegten glockenförmigen Verschlusses über ein mit Übermaß ausgelegten Schweißkonturrand eines Kunststoffbehältnisses mit flaschenförmigem Hals und zylindrischem Anschlussbereich hervorgerufen wird. Durch einen Absenkvorgang ohne Rotation unmittelbar vor dem Erstarren der Reibschweiß-schmelze wird eine im glockenförmigen Innenzylinder befindliche formschlüssige Dichtkontur über eine entsprechende Gegenkontur des Behältnishalses gepresst.

Es wird eine formschlüssige Dichtung erreicht, die ein Eindringen von Partikeln in den Anwenderbereich im Sinne einer Partikelsperre sicher verhindert.

Während beim Rotations-Reibschweißverfahren zum Verschließen eines Kunststoffbehältnisses mit flaschenförmigem Hals und rohrförmigem Anschlussbereich mit bspw. einer glockenförmigen Verschlusskappe in Form eines Originalitätsverschlusses normalerweise ein waagrecht gegeneinander gerichteter Schweißdruck vorliegt, wird hier eine rundum wirkende tangential auf den Mittelpunkt gerichtete Kraft für einen Rotationsschweißprozess genutzt, um die erforderliche Vorspannkraft der zu verschweißenden Bauteile zu erzeugen.

Diese erforderliche Vorspannkraft wird durch einen Untermaß-Durchmesser des einen zylindrischen Innenteils des glockenförmigen Originalitätsverschlusses im Zusammenwirken mit einem demgegenüber Übermaß-Außendurchmesser eines Schweißrings, welcher sich auf dem Umfang des zylindrischen Teils des flaschenförmigen Öffnungsstutzens (Gebindehals) befindet, durch Aufpressen des Originalitätsverschlusses (Verschlusskappe) bis über den am Behältnishals (Gebindehals / Öffnungsstutzen) des Behältnisses (Beutels / Gebinde) befindlichen Schweißring (bspw. integraler Bestandteil des Öffnungsstutzens oder dort aufgeschobenes separates Bauteil) erzeugt. Hierauf wird der Originalitätsverschluss (Verschlusskappe) in Rotation versetzt, wogegen der Öffnungsstutzen (Gebindehals) durch Fixierung fest stehen bleibt.

Nach Erreichen des Schmelze-Zustandes (Verschweißung) wird die mit einem innenliegenden Dichtrand versehene glockenförmige Verschlusskappe (Originalitätsverschluss) ohne Drehung abgesenkt und über einen korrespondierenden Dichtansatz (Schulter, Flansch, Randbereich) am flaschenförmigen Hals (Öffnungsstutzen) des aus Kunststoff gefertigten Behältnisses (Kunststoffbehältnis) gepresst, wo er bis zum Erkalten der Reibschweiß-Schmelze (Verschweißung) fixiert wird. Somit wird zum einen das Gebinde (Behältnis) stoffschlüssig verschlossen und zum anderen auftretenden Partikeln der Weg in den Anwenderbereich (Innere des Beutels / Ein-/Auslass) formschlüssig versperrt, insbesondere durch die Dichtungseinrichtung (Dichtlippe / O-Ring).

Es kann auch ein alternativer oder zusätzlicher Dichtring aus elastischem Material, wie etwa Silikon oder EPDM eingesetzt werden, der am feststehenden Teil des Behältnisses (Öffnungsstutzen) angeordnet ist und beim Aufsetzen des Originalitätsverschlusses (Verschluss, Verschlusskappe) in einen zylindrischen Teil des Originalitätsverschlusses abdichtend eintaucht.

Während der Rotation des Reibschweißsystems gleitet dieser mit geeigneten Gleitmitteln ausgerüstete O-Ring ohne Partikel zu erzeugen an den Innenwänden des zylindrischen Teils der Verschlusskappe (erster Abschnitt des Originalitätsverschlusses) und dichtet permanent den Schweißbereich (Verschweißung) gegenüber dem Anwenderbereich (Ein-/Auslass, Innere des Behältnisses) ab. Der Innenzylinder (erster Abschnitt) des Originalitätsverschlusses ist so gestaltet, dass während des Absenkens (auf das Behältnis zu gerichtete Translationsbewegung) des Originalitätsverschlusses (Verschlusskappe) beim Schweiß- und Abkühlvorgang der Dichtring (die Dichtungseinrichtung) ausreichend axialen Weg zum Verfahren innerhalb des Innenzylinders hat, um so seine Dichtfunktion beibehalten zu können.

Es soll nicht unerwähnt bleiben, dass in einer besonderen Variante ein direktes Aufsetzen des Originalitätsverschlusses bis zu einer Tiefe vorgesehen ist, bei dem der elastische O-Dichtring direkt mit dem zylindrischen Innenteil des Originalitätsverschlusses und der Außenumfangsfläche des Öffnungsstutzens in Eingriff steht, gefolgt von einem Rotationsschweißvorgang, ohne einen nachfolgenden Absenkvorgang des Originalitätsverschlusses.

Letztlich wird die Herstellung einer sterildichten Verbindung von z.B. einem Beutelport mit einem Originalitätsverschluss erreicht. Während des Verschließprozesses werden Partikel zuverlässig von den benutzerkritischen Bereichen fern gehalten. Eine stoffschlüssige Verbindung des Originalitätsverschlusses mit dem Öffnungsstutzen wird erreicht. Als weiterführende Besonderheit sei darauf hingewiesen, dass es möglich ist, ein Kunststoff-/Metallgemisch in einen Kunststoffteil zur Bildung eines induktiv erhitzbaren Bereiches einzubringen. Hierbei lassen sich Zwei-Komponenten Spritzgießverfahren oder Umspritzvorgänge eines Einwegeteils zum Zwecke der sterildichten Verschweißung des Behälters mit dem Verschlusselement (Originalitätsverschluss) nutzen.

Die Erfindung wird auch mit Hilfe einer Zeichnung näher erläutert, die zwei unterschiedliche Ausführungsbeispiele visualisiert. Es zeigen:
Fig. 1 eine erste Ausführungsform eines erfindungsgemäßen Behältnisses im Bereich des Öffnungsstutzens und des aufgeschobenen Originalitätsverschlusses in einer schematischen Schnittansicht (Längsschnitt),
Fig. 2 die Situation des Behältnisses aus Fig. 1 bei Beginn des Herstellens der Verschweißung, wobei mittels Rotation des Originalitätsverschlusses auf einem öffnungsstutzenfesten Schweißring und relativ zum Öffnungsstutzen eine Schmelze entsteht,
Fig. 3 einen zeitlich späteren Zustand des Behältnisses aus Fig. 1, wobei im Schmelzzustand ein Absenken des Originalitätsverschlusses auf das Behältnis zu erfolgt ist, bis eine Dichtungseinrichtung abdichtend auf einen Ein-/Auslass des Öffnungsstutzens einwirkt, wobei nachfolgend ein Auskühlen der erzeugten Verschweißung stattfindet,
Fig. 4 eine zweite Ausführungsform eines erfindungsgemäßen Behältnisses im Bereich des Öffnungsstutzens und des Originalitätsverschlusses in einer Längsschnittdarstellung zu einem ersten Zeitpunkt, und
Fig. 5 das Behältnis des Ausführungsbeispiels gemäß der Fig. 4 zu einem späteren Zeitpunkt, bei der die Verschweißung unter Hervorrufen einer Schmelze aufgrund einer Rotation bis zum schlagartigen Stoppen der Rotation ohne Bremsweg erzeugt ist.

Die Figuren sind lediglich schematischer Natur und dienen nur dem Verständnis der Erfindung. Die gleichen Elemente sind mit denselben Bezugszeichen versehen.

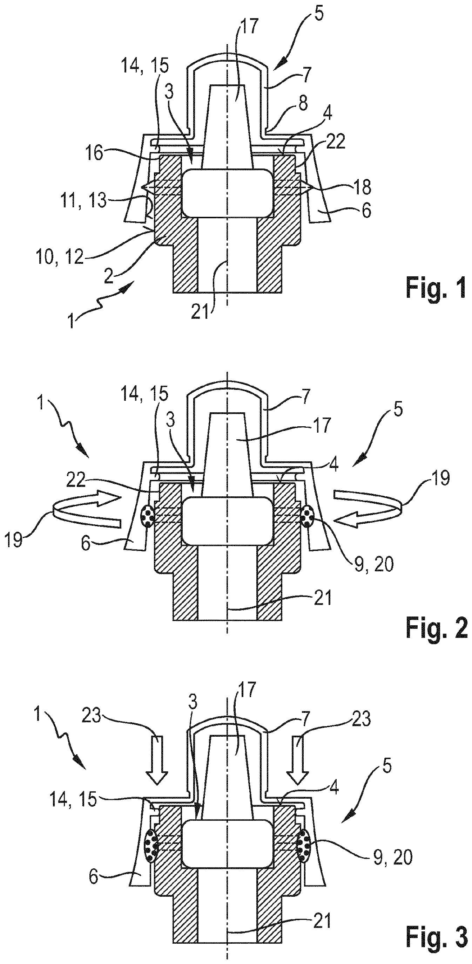

In Fig. 1 ist ein Ausschnitt eines erfindungsgemäßen Behältnisses 1 dargestellt. Das Behältnis 1 kann als Gebinde, Beutel, Flasche, Container, Packung oder Schachtel ausgestaltet sein. Es ist geeignet, Arzneimittel und/oder Medizinprodukte aufzunehmen. Das Behältnis 1 ist aus Kunststoff gefertigt, insbesondere aus sterilem Material.

Das Behältnis 1 kann mehrere Öffnungen aufweisen, wobei an einer Öffnung ein Öffnungsstutzen 2 vorhanden ist, der einen Ein-/Auslass (Port) 3 in einer Stirnseite 4 aufweist.

Über den Öffnungsstutzen 2 ist ein Originalitätsverschluss 5 gestülpt (geschoben, gesetzt, geschraubt oder verbracht). Der Originalitätsverschluss (OV) 5 weist einen am Öffnungsstutzten 2 zu verbleibenden ersten Abschnitt 6 des Originalitätsverschlusses 5 und einen vom ersten Abschnitt 6 abreißbaren oder abbrechbaren zweiten Abschnitt 7 des Originalitätsverschlusses auf. Der erste Abschnitt 6 ist vom zweiten Abschnitt 7 an einer Sollbruchlinie oder Sollbruchstelle 8 unter Aufbringung normaler, von Hand aufgebrachter Kraft trennbar.

Eine Verschweißung 9 ist zwischen einer Außenfläche 10 des Öffnungsstutzens 2 und einer Innenfläche 11 des ersten Abschnitts 6 des Originalitätsverschlusses 5 vorhanden. Die Verschweißung ist insbesondere im Bereich einer Außenumfangsfläche 12 des Öffnungsstutzens 2, insbesondere in einem Bereich, in dem die Außenumfangsfläche 12 eine zylindrische Mantelfläche ist, und einer Innenumfangsfläche 13 des ersten Abschnittes 6 des Originalitätsverschlusses 5 vorhanden.

Eine Dichtungseinrichtung 14 ist als integraler Bestandteil des Originalitätsverschlusses 5, insbesondere des ersten Abschnittes 6 des Originalitätsverschlusses 5 vorhanden. Im ersten Ausführungsbeispiel der Fig. 1 bis 3 ist die Dichtungseinrichtung 14 als mit dem Originalitätsverschluss 5 integrale Dichtungslippe 15 ausgebildet. Die Dichtungslippe 15 ist in unmittelbarer Nähe der Stirnseite 4 des Öffnungsstutzens 2 vorhanden, insbesondere an einer außen liegenden, die Stirnseite 4 begrenzenden umlaufenden Kante 16. Die Stirnseite 4 hat einen ringförmigen Querschnitt mit kreisrundem Außenrand und kreisrundem Innenrand. Innerhalb des Innenrandes, in das Innere des Öffnungsstutzens 2 ragend, ist ein Einsatz, wie ein Luer-Einsatz / Luer-Anschluss 17 eingesetzt.

Auf der Außenseite des Öffnungsstutzens 2 ist ein Schweißring 18 (aus einem schmelzfähigen Material) aufgesetzt. Der Schweißring 18 kann ein integraler Bestandteil des Öffnungsstutzens 2 sein, oder als separates Bauteil auf den Öffnungsstutzen 2 aufgesetzt sein. Dabei, im zweitgenannten Fall, ist der Schweißring 18 allerdings rotationsfest am Öffnungsstutzen 2 angebracht.

Im in Fig. 1 dargestellten Zustand wird der kappenförmige oder glockenförmige Originalitätsverschluss 5 so auf den Öffnungsstutzen 2 gesetzt (geschoben, verbracht, geschraubt), dass der Schweißring 18 gepresst und/oder deformiert wird. In diesem Zustand ist die Dichtungseinrichtung 14 beabstandet von der Kante 16, aber in solch unmittelbarer Nachbarschaft, dass eine Dichtwirkung erreicht ist.

Im nachfolgenden zweiten Zustand ist der Ausschnitt des Behältnisses 1 zum Zeitpunkt dargestellt, in dem der Originalitätsverschluss 5 in Richtung der Pfeile 19 (Rotationsrichtung) relativ zum Öffnungsstutzen 2 gedreht (rotiert, geschwenkt) wird.

Die Dichtungseinrichtung 14 kann eine Lippen- oder Scheibenform haben. Die Dichtungseinrichtung kann ein elastisches Dichtelement sein, bspw. aus LSR (Flüssig-Silikonkautschuk) oder einem anderen geeigneten Elastomer. Es kann mit einem Gleitmittel, wie z.B. Silikonöl gleitfähig und abriebfest gemacht worden sein. Eine formschlüssige Dichtkontur wird dadurch erreicht.

In Fig. 2 ist mit dem Bezugszeichen 20 eine Reibverschweißung 20 dargestellt, die im Bereich des nun geschmolzenen Schweißringes 18 befindlich ist.

Die Rotation des Originalitätsverschlusses 5 wird so lange durchgeführt, bis ein vorzugsweise schlagartiger Stopp der Rotationsbewegung erfolgt, d.h. vorzugsweise ohne einen Bremsweg. Die Verschweißung ist dann noch nicht erkaltet, sondern in einem plastischen Zustand befindlich.

Nachfolgend, in einem weiteren Verfahrensschritt, wird unter Ausschluss einer Rotationsbewegung lediglich eine Translationsbewegung des Originalitätsverschlusses 5, in Richtung einer Längsachse 21 des Öffnungsstutzens 2 hervorgerufen. Die Längsachse 21 ist konzentrisch zu einer Längsachse des Originalitätsverschlusses 5. Die beiden Bauteile sind rotationssymmetrisch zur Längsachse 21 ausgebildet.

Von der Stirnseite 4 in Richtung der Reibverschweißung 20 erstreckt sich eine Umfangsnut 22 über die gesamte Außenumfangsfläche 12 des Öffnungsstutzens 2. Im Schmelzzustand erfolgt nun ein Absenken des Originalitätsverschlusses 5 mit darin integrierter Dichtungseinrichtung 14, derart, dass die Dichtungseinrichtung 14 (die Dichtungslippe 15) in die Umfangsnut 22 eintaucht und die Dichtungslippe 15 mit ihrem inneren Umfang in dichtenden Kontakt mit der Außenfläche der Umfangsnut 22 gelangt. Es ist möglich, dass sich die Dichtungslippe 15 dabei deformiert.

Sobald die Dichtungslippe 15 in die Umfangsnut 22 eingetaucht ist und die Dichtung nachhaltig hergestellt ist, erstarrt die Reibverschweißung 20, so dass die Position des ersten Abschnitts 6 des Originalitätsverschlusses 5 relativ zum Öffnungsstutzen 2 unveränderbar ist. Wird nun auf dem zweiten Abschnitt 7 des Originalitätsverschlusses 5 eine erhöhte Kraft aufgebracht, so reißt der zweite Abschnitt 7 vom ersten Abschnitt 6 entlang der Sollbruchlinie 8 ab und der Luer-Anschluss 17 ist freigegeben, so dass eine Koppelung des Behältnisses mit Sekundäranlagen möglich ist.

Die Dichtungslippe 15 kann auch als Dichtrand OC bezeichnet werden. Die Translationsbewegung des Originalitätsverschlusses 5, auf den Öffnungsstutzen 2 (und damit auf das Behältnis 1) zu, ist in Fig. 3 mit dem Pfeil 23 symbolisiert.

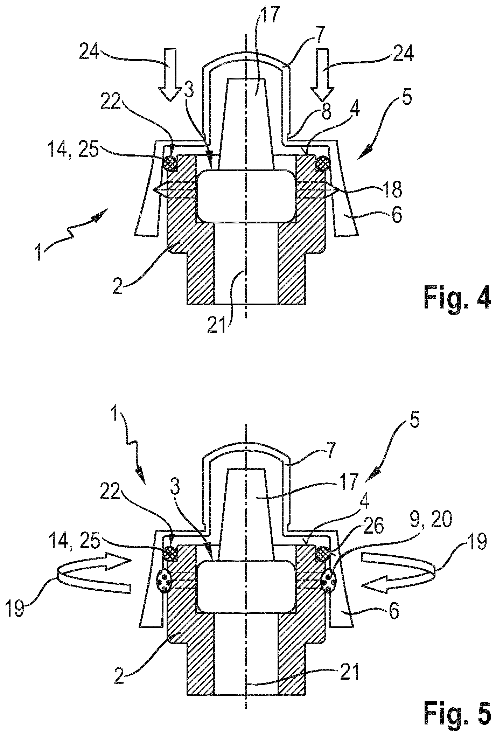

Im zweiten Ausführungsbeispiel der Fig. 4 und 5 wird ein erster Zustand des erfindungsgemäßen zweiten Ausführungsbeispiels des Behältnisses 1 in Fig. 4 wiedergegeben und ein zeitlich späterer Zustand in Fig. 5 wiedergegeben. Ein Aufsetzen des Originalitätsverschlusses 5 auf den Öffnungsstutzen 2 mit einer reinen Translationsbewegung ist durch die Pfeile 24 gekennzeichnet.

Während die meisten Merkmale des zweiten Ausführungsbeispieles 3 bereits bezüglich des ersten Ausführungsbeispiels erläutert wurden, soll hier auf die Unterschiede zum ersten Ausführungsbeispiel besonders eingegangen werden:
So ist in der Umfangsnut 22 eine Dichtungseinrichtung 14 als von den anderen Bauteilen separater elastischer O-Ring 25 ausgebildet. Dieser O-Ring 25, kann anders als in dem Ausführungsbeispiel gemäß der Fig. 4 und 5 auch zusätzlich zu der Dichtungslippe 15 des ersten Ausführungsbeispiels (Fig. 1 bis 3) eingesetzt werden. In dem in den Figuren 4 und 5 gezeigtem Ausführungsbeispiel ist er alternativ dazu eingesetzt.

Der O-Ring 25 ist also vor Beginn einer Rotation des Originalitätsverschlusses 5 relativ zum Öffnungsstutzen 2 in Richtung der Pfeile 19, wie in Fig. 5 dargestellt, bereits in seiner Endposition befindlich. Wird die Verschweißung 9 aufgrund einer Relativrotation des Originalitätsverschlusses 5 zum Öffnungsstutzen 2 als Reibverschweißung 20 ausgebildet, verhindert eine Gleitbeschichtung 26, dass Partikel in den Ein-/Auslass 3 (Port) während der Entstehung der Verschweißung gelangen. Ein wie im ersten Ausführungsbeispiel erläutertes nach Erzeugens der Verschweißung erfolgendes Translationsversetzen des Originalitätsverschlusses 5 weiter auf das Behältnis 1 zu, ist hier nicht nötig, aber möglich.

Das hier vorgestellte Verfahren könnte auch als Schweißverfahren bezeichnet werden, bei dem ein mit einem feststehenden Reibschweißbauteil verbundener Dichtring in einen zylindrischen Teil des Originalitätsverschlusses eintaucht, den Schweißbereich gegenüber dem Anwenderbereich von Beginn an abdichtet, wobei der Dichtring während und nach dem Reibschweißvorgang seine Dichtfunktion beibehält.

Bei diesem Schweißverfahren weist die mit dem feststehenden Reibschweißbauteil verbundene Dichtung eine Lippen- oder Scheibenform auf.

Es ist möglich, dass sowohl die fest dem Verschluss angeordnete Dichtkontur, wie auch ein zusätzliches elastisches Dichtelement eingesetzt ist.

Die Erfindung betrifft zusammenfassend ein Behältnis 1 für Arzneimittel und/oder Medizinprodukte mit einem Öffnungsstutzen 2, der einen Ein-/Auslass 3 aufweist, mit einem über den Öffnungsstutzen 2 gestülpten Originalitätsverschluss 5, wobei der Originalitätsverschluss 5 einen am Öffnungsstutzen 2 zu verbleibenden ersten Abschnitt 6 und einen vom ersten Abschnitt 6 abreißbaren oder abbrechbaren zweiten Abschnitt 7 aufweist, mit des Weiteren einer Verschweißung 9 zwischen einer radialen Außenfläche 10 des Öffnungsstutzens 2 und einer radialen Innenfläche 11 des ersten Abschnitts 6 des Originalitätsverschlusses 5, wobei zwischen der Verschweißung 9 und dem Ein-/Auslass 3 eine Dichtungseinrichtung 14 so angeordnet ist, dass sie zumindest beim Erstellen der Verschweißung 9 entstehende Partikel am Eintritt in den Ein-/Auslass 3 hindert oder abhält. Die Erfindung betrifft auch ein Verfahren zum Verschließen eines Öffnungsstutzens 2 dieses Behältnisses 1 mit dem glocken- oder kappenartigen Originalitätsverschluss 5, wobei der Originalitätsverschluss 5 zuerst über den Öffnungsstutzen 2 gestülpt wird, dann eine Rotation des Originalitätsverschlusses 5 relativ zum Öffnungsstutzen 2 unter Radialkraftbeaufschlagung erzeugt wird, die eine Verschweißung 9, 20 der beiden Bauteile 2, 5 im Bereich einer Materialanhäufung zwischen den beiden Bauteilen 2, 5 hervorruft, wobei nach dem Erzeugen der Verschweißung 9, 20 eine in Längsrichtung des Öffnungsstutzens 2 weisende Translationsbewegung 23 des Originalitätsverschlusses 5 eingeleitet wird, um die Dichtungseinrichtung 14 in sicheren Dichtkontakt mit dem Öffnungsstutzen 2 zu bringen.

### Bezugszeichenliste

- 1: Behältnis
- 2: Öffnungsstutzen
- 3: Ein-/Auslass
- 4: Stirnseite
- 5: Originalitätsverschluss
- 6: erster Abschnitt des Originalitätsverschlusses
- 7: zweiter Abschnitt des Originalitätsverschlusses
- 8: Sollbruchstelle
- 9: Verschweißung
- 10: Außenfläche
- 11: Innenfläche
- 12: Außenumfangsfläche
- 13: Innenumfangsfläche
- 14: Dichtungseinrichtung
- 15: Dichtungslippe
- 16: Kante
- 17: Luer-Anschluss
- 18: Schweißring
- 19: Pfeil/Rotationsrichtung
- 20: Reibverschweißung
- 21: Längsachse
- 22: Umfangsnut
- 23: Pfeil / Translationsrichtung
- 24: Pfeil / Translationsrichtung
- 25: O-Ring
- 26: Gleitbeschichtung

## Patentansprüche

1. Behältnis (1) für Arzneimittel und/oder Medizinprodukte mit
- einem Öffnungsstutzen (2), der einen Ein-/Auslass (3) aufweist und mit einem darin eingesetzten Luer-Anschluss (17),
- einem über den Öffnungsstutzen (2) gestülpten Originalitätsverschluss (5), der einen am Öffnungsstutzen (2) verbleibenden ersten Abschnitt (6) und einen vom ersten Abschnitt (6) an einer Sollbruchlinie abreißbaren oder abbrechbaren zweiten Abschnitt (7) hat und
- einer Verschweißung (9) zwischen einer Außenfläche (10) des Öffnungsstutzens (2) und einer Innenfläche (11) des ersten Abschnitts (6) des Originalitätsverschlusses (5), **dadurch gekennzeichnet, dass**
die Verschweißung (9) zwischen einer radial äußeren Umfangsfläche des Öffnungsstutzens (2) und einer radial inneren Umfangsfläche des den Öffnungsstutzen (2) in diesem Bereich hülsenförmig umgebenden ersten Abschnitts (6) sowie in axial proximalem Abstand zum Ein-/Auslass (3) vorgesehen ist, wobei
axial zwischen der Verschweißung (9) und dem Ein-/Auslass (3) des Öffnungsstutzens (2) sowie in axial proximalem Abstand zur Sollbruchlinie eine Dichtungseinrichtung (14) radial zwischen dem ersten Abschnitt (6) und dem Öffnungsstutzen (2) so angeordnet ist, dass sie zumindest beim Erstellen der Verschweißung (9) entstehende Partikel am Eintritt in den Ein-/Auslass (3) hindert oder abhält.

2. Behältnis (1) nach Anspruch 1, **dadurch gekennzeichnet, dass** die Dichtungseinrichtung (14) mit der Stirnseite (4) des Öffnungsstutzens (2) vorzugsweise mit einer die Stirnseite (4) außenseitig begrenzenden Umfangskante (16) in dichtender Wirkbeziehung steht und/oder mit einer Außenumfangsfläche (12) des Öffnungsstutzens (2) in dichtender Wirkbeziehung steht, wobei der Öffnungsstutzen (2) im Axialbereich der Dichtungseinrichtung (14) außenseitig eine Eindrehung (22) zur Ausbildung einer Dichtkontaktfläche aufweist.

3. Behältnis (1) nach einem der Ansprüche 1 bis 2, **dadurch gekennzeichnet, dass** die Verschweißung (9) an der Außenumfangsfläche (12) des Öffnungsstutzens (2) in einem zylindrischen Axialbereich, und an einer Innenumfangsfläche (13) des ersten Abschnitts (6) des Originalitätsverschlusses (5) in einem konischen Axialbereich, den Öffnungsstutzen (2) mit dem ersten Abschnitt (6) stoffschlüssig verbindend, vorgesehen ist.

4. Behältnis (1) nach einem der Ansprüche 1 bis 3, **dadurch gekennzeichnet, dass** die Dichtungseinrichtung (14) als zumindest eine radial einwärts gerichtete Dichtlippe oder Umfangsleiste (15) am ersten Abschnitt (6) des Originalitätsverschlusses (5) fest angeordnet oder als zumindest ein separater O-Ring (25) am Öffnungsstutzen (2) festgelegt ist.

5. Behältnis (1) nach einem der Ansprüche 1 bis 4, **dadurch gekennzeichnet, dass** die Dichtungseinrichtung (14) eine gleitfähig oder abriebfest ausgestaltete Oberfläche aufweist, die durch Plasmaätzen und/oder Plasmabeschichten geschaffen ist, und diese Oberfläche zumindest dem Öffnungsstutzen (2) und/oder dem Originalitätsverschluss (5) zugewandt ist.

6. Behältnis (1) nach einem der Ansprüche 2 bis 5, **dadurch gekennzeichnet, dass** sich die umfangsseitige Eindrehung (22) zum dichtenden Auflagern der Dichtungseinrichtung (14) über eine vorbestimmte Axiallänge größer als die Axiallänge der Dichtungseinrichtung (14) erstreckt.

7. Behältnis (1) nach einem der Ansprüche 1 bis 6, **dadurch gekennzeichnet, dass** die Verschweißung (9) eine Rotations-Reibverschweißung und eine kombinierte Rotations - Translations - Reibverschweißung (20) ist.

8. Behältnis (1) nach einem der Ansprüche 1 bis 7, **dadurch gekennzeichnet, dass** der in den Ein-/Auslass (3) des Öffnungsstutzens (2) eingesetzte Luer-Anschluss (17) hülsenförmig und umfangsseitig fluiddicht eingesetzt ist und dass dessen distaler Anschlussabschnitt axial über die Stirnseite des Öffnungsstutzens (2) vorragt und vom zweiten Abschnitt (7) des Orginalitätsverschlusses (5) kappenförmig umgeben ist.

9. Behältnis (1) nach einem der Ansprüche 1 bis 8, **dadurch gekennzeichnet, dass** die Sollbruchstelle oder -linie (8) zwischen dem ersten Abschnitt (6) des Originalitätsverschlusses (5) und dem zweiten Abschnitt (7) des Originalitätsverschlusses (5) auf einer der Verschweißung (9, 20) axial gegenüberliegenden Seite der Dichtungseinrichtung (14) positioniert ist.

10. Verfahren zum Verschließen eines Öffnungsstutzens (2) eines Behältnisses (1) gemäß einem der Ansprüche 1 bis 10, wobei der Originalitätsverschluss (5) zuerst über den Öffnungsstutzen (2) gestülpt wird, dann eine Rotation des Originalitätsverschlusses (5) relativ zum Öffnungsstutzen (2) erzeugt wird, die ein Aufschmelzen einer Materialanhäufung im Bereich der Verschweißung (9, 20) radial zwischen den beiden Bauteilen (2, 5) hervorruft, wobei nach dem Aufschmelzen der Materialanhäufung eine in Längsrichtung des Öffnungsstutzens (2) weisende Translationsbewegung (23) des Originalitätsverschlusses (5) eingeleitet wird, um den Originalitätsverschluss (5) weiter auf den Öffnungsstutzen (2) zu schieben und dabei die Dichtungseinrichtung (14) umfangsseitig in Dichtkontakt mit dem Öffnungsstutzen (2) zu bringen.

11. Verfahren nach Anspruch 10, **dadurch gekennzeichnet, dass** die Translationsbewegung (23) vor dem Erstarren der Verschweißung (9, 20) durchgeführt wird.

12. Verfahren nach Anspruch 10 oder 11, **dadurch gekennzeichnet, dass** die Verschweißung (9, 20) durch Rotation des Originalitätsverschlusses (5) relativ zum Öffnungsstutzen (2) unter radialer Kraftbeaufschlagung und Deformation des ersten Abschnitts (6) erzeugt wird.

13. Verfahren nach Anspruch 10, 11, oder 12, **dadurch gekennzeichnet, dass** die Dichtungseinrichtung (14) durch eine Axialbewegung des Originalitätsverschlusses axial verlagert wird.

14. Verfahren nach einem der Ansprüche 10 bis 13, **dadurch gekennzeichnet, dass** eine Oberfläche der Dichtungseinrichtung (14), die mit einem rotierbaren oder rotierenden Bauteil in Kontakt bringbar oder befindlich ist, gleitfähig und abriebfest ausgestaltet wird, durch Plasmaätzen und/oder Plasmabeschichten gleitfähig und abriebfest ausgestaltet wird.

## Claims

1. Container (1) for drugs and/or medical devices with
- an opening port (2), having an inlet / outlet (3) with a Luer connection (17) inserted therein,
- a tamper-evident container lid (5) put over the opening port (2) having a first portion (6) which remains at the opening port (2) and a second portion (7) which can be ripped off from or broken off from the first portion (6) at a predetermined breaking line, and
- a welding (9) between an outer surface (10) of the opening port (2) and an inner surface (11) of the first portions (6) of the tamper-evident container lid (5),
**characterized in that**
the welding (9) is provided between a radially outer circumferential surface of the opening port (2) and a radially inner circumferential surface of the first portion (6) which surrounds the opening port (2) in this region in a sleeve-like manner as well as in axially proximal distance to the inlet / outlet (3), wherein
axially between the welding (9) and the inlet / outlet (3) of the opening port (2) as well as in axially proximal distance to the predetermined breaking line, a sealing device (14) is provided radially between the first portion (6) and the opening port (2) such that it hinders or prevents at least particles which are created during of the welding (9) from entering the inlet / outlet (3).

2. Container (1) according to claim 1, **characterized in that** the sealing device (14) is in sealing connection with the front side (4) of the opening port (2) preferably with a circumferential edge (16) which delimits the front side (4) on the outside and/or is in sealing connection with an outer circumferential surface (12) of the opening port (2), wherein the opening port (2) has a groove (22) on the outside in the axial region of the sealing device (14) for forming a sealing contact surface.

3. Container (1) according to one of claims 1 to 2, **characterized in that** the welding (9) is provided at the outer circumferential surface (12) of the opening port (2) in a cylindrical axial region, and at an inner circumferential surface (13) of the first portions (6) of the tamper-evident container lid (5) in a conical axial region, connecting the opening port (2) with the first portion (6) in a material-fitting manner.

4. Container (1) according to one of claims 1 to 3, **characterized in that** the sealing device (14) is fixedly arranged as at least one radially inward oriented sealing lip or circumferential bar (15) at the first portion (6) of the tamper-evident container lid (5) or is configured as at least one separate O-ring (25) at the opening port (2).

5. Container (1) according to one of claims 1 to 4, **characterized in that** the sealing device (14) has a slidable or abrasion-resistant surface created by plasma etching and/or plasma coating, and this surface is facing at least the opening port (2) and/or the tamper-evident container lid (5).

6. Container (1) according to one of claims 2 to 5, **characterized in that** the circumferential groove (22) extends, to sealingly support the sealing device (14), over a predetermined axial length which is larger than the axial length of the sealing device (14).

7. Container (1) according to one of claims 1 to 6, **characterized in that** the welding (9) is a rotation friction welding and a combined rotation-translation friction welding (20).

8. Container (1) according to one of claims 1 to 7, **characterized in that** the Luer connection (17) inserted in the inlet / outlet (3) of the opening port (2) is inserted in a sleeve-like manner and circumferentially in a fluid-tight manner and that its distal connecting portion axially protrudes over the front side of the opening port (2) and is surrounded by the second portion (7) of the tamper-evident container lid (5) in a cap-like shape.

9. Container (1) according to one of claims 1 to 8, **characterized in that** the predetermined breaking point or line (8) is positioned between the first portion (6) of the tamper-evident container lid (5) and the second portion (7) of the tamper-evident container lid (5) on a side of the sealing device (14) lying axially opposite to the welding (9, 20).

10. Method for closing an opening port (2) of a container (1) according to one of claims 1 to 10, wherein the tamper-evident container lid (5) is first put over the opening port (2), then a rotation of the tamper-evident container lid (5) relative to the opening port (2) is generated which causes fusing of a material accumulation in the region of the welding (9, 20) radially between the two components (2, 5), wherein after fusing of the material accumulation, a translation movement (23) of the tamper-evident container lid (5) in a longitudinal direction of the opening port (2) is initiated, in order to push the tamper-evident container lid (5) further onto the opening port (2) and to bring the sealing device (14) in sealing contact with the opening port (2) on the circumferential side.

11. Method according to claim 10, **characterized in that** the translation movement (23) is conducted before the welding (9, 20) becomes rigid.

12. Method according to claim 10 or 11, **characterized in that** the welding (9, 20) is generated by rotation of the tamper-evident container lid (5) relative to the opening port (2) by radially applying force and deformation of the first portion (6).

13. Method according to claim 10, 11, or 12, **characterized in that** the sealing device (14) is axially shifted by an axial movement of the tamper-evident container lid.

14. Method according to one of claims 10 to 13, **characterized in that** a surface of the sealing device (14), which can be brought into contact with or is in contact with a rotatable or rotating component, is configured to be slidable and abrasion-resistant and is configured to be slidable and abrasion-resistant by plasma etching and/or plasma coating.

## Revendications

1. Récipient (1) pour médicaments et/ou produits médicaux avec
- un embout d'ouverture (2), qui comprend une entrée/sortie (3) et avec un raccord Luer (17) inséré à l'intérieur de celui-ci,
- une fermeture inviolable (5) rabattue sur l'embout d'ouverture (2), qui comprend une première portion (6) restant sur l'embout d'ouverture (2) et une deuxième portion (7) pouvant être déchirée ou cassée au niveau d'une ligne de rupture avec la première portion (6) et
- une soudure (9) entre une face externe (10) de l'embout d'ouverture (2) et une face interne (11) de la première portion (6) de la fermeture inviolable (5), **caractérisé en ce que**
la soudure (9) est prévue entre une face circonférentielle radiale externe de l'embout d'ouverture (2) et une face circonférentielle radiale interne de la première portion (6) entourant comme un manchon l'embout d'ouverture (2) dans cette partie ainsi qu'à une distance axiale proximale par rapport à l'entrée/sortie (3), moyennant quoi
axialement entre la soudure (9) et l'entrée/sortie (3) de l'embout d'ouverture (2) ainsi qu'à une distance axiale proximale de la ligne de rupture, un dispositif d'étanchéité (14) est disposé radialement entre la première portion (6) et l'embout d'ouverture (2) de façon à empêcher la pénétration par l'entrée/sortie (3) de particules créés lors de la réalisation de la soudure (9).

2. Récipient (1) selon la revendication 1, **caractérisé en ce que** le dispositif d'étanchéité (14) est en liaison fonctionnelle étanche avec le côté frontal (4) de l'embout d'ouverture (2), de préférence avec une arête circonférentielle (16) délimitant à l'extérieur le côté frontal (4) et/ou est en liaison fonctionnelle étanche avec une face circonférentielle externe (12) de l'embout d'ouverture (2), l'embout d'ouverture (2) comprenant extérieurement une gorge (22) pour la formation d'une surface de contact étanche dans la partie axiale du dispositif d'étanchéité (14).

3. Récipient (1) selon l'une des revendications 1 à 2, **caractérisé en ce que** la soudure (9) est prévue sur la face circonférentielle externe (12) de l'embout d'ouverture (2) dans une partie axiale cylindrique et sur une face circonférentielle interne (13) de la première portion (6) de la fermeture inviolable (5) dans une partie axiale conique, reliant par liaison de matière l'embout d'ouverture (2) avec la première portion (6).

4. Récipient (1) selon l'une des revendications 1 à 3, **caractérisé en ce que** le dispositif d'étanchéité (14) est disposé de manière fixe comme une lèvre d'étanchéité orientée radialement vers l'intérieur ou une baguette circonférentielle (15) sur la première portion (6) de la fermeture inviolable (5) ou est fixé sous la forme d'au moins un joint torique (25) séparé sur l'embout d'ouverture (2).

5. Récipient (1) selon l'une des revendications 1 à 4, **caractérisé en ce que** le dispositif d'étanchéité (14) comprend une surface conçue de manière glissante ou anti-abrasive qui est créée par gravure au plasma et/ou par revêtement au plasma et cette surface est orientée au moins vers l'embout d'ouverture (2) et/ou la fermeture inviolable (5).

6. Récipient (1) selon l'une des revendications 2 à 5, **caractérisé en ce que** la gorge (22) côté circonférence s'étend sur une longueur axiale prédéterminée supérieure à la longueur axiale du dispositif d'étanchéité (14), afin de former de façon étanche un support du dispositif d'étanchéité (14).

7. Récipient (1) selon l'une des revendications 1 à 6, **caractérisé en ce que** la soudure (9) est une soudure par friction rotative et une soudure par friction combinée rotative et par translation (20).

8. Récipient (1) selon l'une des revendications 1 à 7, **caractérisé en ce que** le raccord Luer (17) inséré dans l'entrée/sortie (3) de l'embout d'ouverture (2) est inséré sous la forme d'un manchon et côté circonférence de manière étanche aux fluides et **en ce que** sa portion de raccordement distale dépasse radialement du côté frontal de l'embout d'ouverture (2) et est entourée, sous la forme d'un capuchon, par la deuxième portion (7) de la fermeture inviolable (5).

9. Récipient (1) selon l'une des revendications 1 à 8, **caractérisé en ce que** le point ou la ligne de rupture (8) se trouve entre la première portion (6) de la fermeture inviolable (5) et la deuxième portion (7) de la fermeture inviolable (5) sur un côté du dispositif d'étanchéité (14), opposé axialement à la soudure (9, 20).

10. Procédé de scellement d'un embout d'ouverture (2) d'un récipient (1) selon l'une des revendications 1 à 10, la fermeture inviolable (5) étant d'abord rabattue sur l'embout d'ouverture (2), puis une rotation de la fermeture inviolable (5) par rapport à l'embout d'ouverture (2) est générée, qui provoque la fusion d'une accumulation de matériau au niveau de la soudure (9, 20) radialement entre les deux composants (2, 5), moyennant quoi, après la fusion de l'accumulation de matériau, est initié un mouvement de translation (23) de la fermeture inviolable (5), orienté dans la direction longitudinale de l'embout d'ouverture (2), afin de pousser la fermeture inviolable (5) plus loin sur l'embout d'ouverture (2) et d'amener le dispositif d'étanchéité (14) côté circonférence en contact étanche avec l'embout d'ouverture (2).

11. Procédé selon la revendication 10, **caractérisé en ce que** le mouvement de translation (23) est effectué avant la solidification de la soudure (9, 20).

12. Procédé selon la revendication 10 ou 11, **caractérisé en ce que** la soudure (9, 20) est produite par la rotation de la fermeture inviolable (5) par rapport à l'embout d'ouverture (2) sous l'action d'une force radiale et par une déformation de la première portion (6).

13. Procédé selon la revendication 10, 11 ou 12, **caractérisé en ce que** le dispositif d'étanchéité (14) est déplacé axialement par un mouvement axial de la fermeture inviolable.

14. Procédé selon l'une des revendications 10 à 13, **caractérisé en ce qu**'une surface du dispositif d'étanchéité (14), qui peut être amené ou qui est en contact avec un composant pouvant être mis en rotation ou qui est en rotation, est conçue de manière glissante et anti-abrasive, par gravure au plasma et/ou par revêtement au plasma.
